Europäisches Patentamt

European Patent Office

Office européen des brevets

(11) Veröffentlichungsnummer: **0 293 855 B1**

# EUROPÄISCHE PATENTSCHRIFT

(45) Veröffentlichungstag der Patentschrift: **16.12.92**

(51) Int. Cl.⁵: **C01F 11/18**, B01J 2/16, A23K 1/16

(21) Anmeldenummer: **88108764.7**

(22) Anmeldetag: **01.06.88**

(54) **Granulat auf Basis von Erdalkalikarbonaten.**

(30) Priorität: **04.06.87 DE 3718692**

(43) Veröffentlichungstag der Anmeldung:
**07.12.88 Patentblatt 88/49**

(45) Bekanntmachung des Hinweises auf die
Patenterteilung:
**16.12.92 Patentblatt 92/51**

(84) Benannte Vertragsstaaten:
**AT BE CH DE FR GB LI LU NL**

(56) Entgegenhaltungen:
DE-C- 1 029 397
FR-A- 2 218 932
US-A- 2 538 802
US-A- 3 150 926
US-A- 3 743 691

**PATENT ABSTRACTS OF JAPAN vol. 9, no. 233 (C-304)(1956), 19 september 1985; & JP-A-6090818 8KOMESHIYOU SETSUKAI KOGYO K.K.) 22.5.1985**

(73) Patentinhaber: **Rheinische Kalksteinwerke GmbH.**
**Wilhelmstrasse 77**
**W-5603 Wülfrath(DE)**

(72) Erfinder: **Hörster, Eberhard, Chem.-Ing.**
**Schulstrasse 15**
**W-5603 Wülfrath(DE)**
Erfinder: **Kienow, Ekkehard, Dipl.-Phys, Dr.-Ing.**
**Auf den Pöthen 21**
**W-5620 Velbert 15(DE)**

**Beschreibung**

Die Erfindung betrifft ein Granulat aus gebrochener Körnung von Erdalkalikarbonaten und einem kalkhaltigen Bindemittel in Form eines aus Erdalkalihydroxid rekarbonatisierten Erdalkalikarbonats sowie ein Verfahren zur Herstellung des Granulats und seine Verwendung.

Bekannt sind granulierte Kalksteinmehle, die mit organischen Zusätzen gebunden sind.

Bekannt sind weiterhin granulierte kalkhaltige Düngemittel, die neben Kalziumkarbonat noch Kalziumhydroxid als Bindemittel in Mengen von > 10 % enthalten.

Diese Granulate auf Kalziumkarbonatbasis weisen in der Regel die für die Handhabbarkeit erwünschten Vorteile auf, wie enger Korngrößenbereich, Staubfreiheit und gute Rieselfähigkeit. Nachteilig ist aber für viele Anwendungszwecke die verfahrensbedingte Anwesenheit von Verunreinigungen durch organische Zusätze. Größere Mengen Erdalkalihydroxide schränken wegen des stark alkalischen Verhaltens die Anwendungsmöglichkeiten ebenfalls ein.

Für Anwendungszwecke, bei denen das Auflösungsverhalten im Vordergrund steht, mußten bisher weiche Jurakalke oder weiche und poröse Kreiden eingesetzt werden. Die devonischen Massenkalke zeigen nur dann ähnliches Auflösungsverhalten, wenn sie als Kalksteinmehl eingesetzt werden, eignen sich aber in dieser Form wiederum nur für bestimmte Anwendungen.

Bei der Verwendung als Futtermittel kommt nämlich hinzu, daß neben der Reaktionsfähigkeit bei der Aufnahme im Tiermagen auch die mechanischen Eigenschaften von Bedeutung sind. Gebrochene Kalksteinkörnungen müssen genügend großen Durchmesser besitzen und dürfen nicht als Mehl vorliegen, da Mehle als Futter nicht von allen Tieren aufgenommen werden und/oder bei der Futteraufnahme weggeblasen werden, so daß das gewünschte Mischungsverhältnis von Kalkstein mit anderen Bestandteilen eines Futtermittels unzulässig verändert wird. Die Einzelkörner müssen aber andererseits durch Kauen leicht zu zerkleinern sein und sollen beim Verdauungsprozeß vollständig resorbiert werden.

Der Erfindung liegt die Aufgabe zugrunde, ein Granulat aus gebrochener Körnung von Erdalkalikarbonaten und einem kalkhaltigen Bindemittel in Form eines aus Erdalkalihydroxid rekarbonatisierten Erdalkalikarbonats mit folgenden Eigenschaften bereitzustellen:

- Der Massenanteil an nichtkarbonatischen Verunreinigungen ist < 5 %.
- Die basische Wirkung kann leicht abgepuffert werden.
- Das Granulat läßt sich mit geringem mechanischem Aufwand wieder in die Ausgangskörnung zerlegen, um dann wieder als reaktive Kalksteinkörnung mit großer spezifischer Oberfläche zu wirken.

Die Aufgabe wird dadurch gelöst, daß die Granulatkörner eine Porosität aufweisen. Die mechanische Zerkleinerung wird dadurch erleichtert. Das Erdalkalihydroxid kann dabei sowohl ein reiner Stoff als auch eine Mischung mehrerer Erdalkalihydroxide sein.

Eine vorteilhafte Ausgestaltung der Erfindung besteht darin, daß die Druckfestigkeit in einem Bereich von 500 bis 10000 N/Granulat einstellbar ist.

Als interner Stand der Technik ist bekannt, daß mit Kalziumhydroxid gebundene Gesteinsmehlgranalien in Chargentrommeln unter $CO_2$-Beaufschlagung getrocknet und karbonatisiert werden können. Allerdings laufen im Trommelreaktor Trocknung und Karbonatisierung nicht parallel ab. Die Trocknung ist deutlich schneller und die Granalien müssen zur Vervollständigung der Reaktion mit $CO_2$ wieder angefeuchtet werden, da die Karbonatisierung nur bei feuchten Granalien mit ausreichender Geschwindigkeit vor sich geht. Die Karbonatisierungszeiten im Trommelreaktor betragen ca. 60 min.

Demgegenüber kann ein Verfahren zur Herstellung des erfindungsgemäßen Granulats aus gebrochener Körnung von Erdalkalikarbonaten und unter Zusatz von Erdalkalihydroxid und Wasser durch Umsetzung mit gasförmigem $CO_2$ in einem fluidisierten Bett zur Lösung der obengenannten Aufgabe dadurch gekennzeichnet sein, daß die Betthöhe des fluidisierten Bettes so eingestellt wird, daß die Reaktionsgeschwindigkeit der Umsetzung mit $CO_2$ größer ist als die Trockungsgeschwindigkeit der Schüttung.

Damit läßt sich ein Massenanteil an Erdalkalihydroxid von < 3 % in einem kontinuierlichen Prozeß bei Verweilzeiten von ≦ 10 min auf wirtschaftlich vorteilhafte Weise erreichen.

Besonders vorteilhaft ist die Verwendung des Granulates als kalzium- und/oder magnesiumhaltiger Bestandteil eines Futtermittels wegen der gegenüber Kalksteinmehlen geringeren Neigung zur Entmischung, insbesondere während des Freßvorganges bei Kühen.

In Tabelle 1 wird das erfindungsgemäße Granulat an einem Beispiel anhand einiger Eigenschaften näher charakterisiert und mit natürlichen Gesteinen der gleichen Korngrößenklasse verglichen.

Das auf der Basis von devonischem Massenkalk nach der Erfindung hergestellte Kalziumkarbonatgranulat zeigt Eigenschaftswerte, die mit denen von Kreidekalk vergleichbar sind.

Tabelle 1: Einige Eigenschaften des erfindungsgemäßen
Granulats und Vergleich mit natürlichen
Gesteinen (Kornklasse 1,6 bis 2,0 mm)

| Eigenschaft | Granulat nach der Erfindung | devonischer Kalkstein | Kreide |
|---|---|---|---|
| $CaCO_3$-Gehalt Massenanteil in % | > 95 | > 97 | > 88 |
| Druckfestigkeit [1] N | 2160 | 52000 | 2700 |
| Chemisches Auflösungsverhalten [2] $t_{50}$ - Wert für $CaCO_3$ - Anteil min | 216 | 340 | 246 |
| Schüttdichte $kg/m^3$ | 1140 | 1390 | 1080 |

[1] Es ist die mittlere Kraft angegeben, bei der die Körner der angegebenen Größenklasse zerdrückt werden.

[2] pH-Wert 3; 0,2 N HCl; 20 °C; 300 U/min.

Für das Verfahren zur Herstellung des erfindungsgemäßen Granulats aus gebrochener Körnung von Erdalkalikarbonaten werden nachstehend zwei Beispiele angegeben.

Beispiel 1

Das Massenverhältnis von Kalksteinmehl, bei dem der Anteil an Körnung > 90 $\mu$m 20 % beträgt, und Kalkhydrat, das eine Korngröße von < 100 $\mu$m aufweist, beträgt 85 : 15. Auf 1 kg der trockenen Mischung werden 150 g Wasser zugegeben. Das daraus hergestellte Granulat enthält einen Massenanteil von 10 % an Kalziumhydroxid. Die Korngrößenverteilung beträgt 0 bis 4 mm. Das Granulat wird auf einen Fließbett-Chargentrockner gegeben, bei dem das Trocknungsgut im Kreis geführt wird, und der eine Gerätebelastung von 170 kg/m² Anströmfläche hat. Die Bettgeschwindigkeit ist > 0,2 m/s. Als Trocknungs- und Karbonatisiergas wird Luft mit einem Volumenanteil von 13 % $CO_2$ bei 200 °C eingesetzt bei einer Strömungsgeschwindigkeit des Gases von 1 bis 1,5 m/s bezogen auf den freien Querschnitt. Die Trocknungs- und Karbonatisierzeit beträgt 5 min. Im erhaltenen rekarbonatisierten Granulat beträgt der Massenanteil an Kalziumhydroxid weniger als 0,7 % und der Massenanteil an Wasser (Restfeuchtegehalt) weniger als 0,2 %.

Beispiel 2

Das nicht karbonatisierte Granulat aus Beispiel 1 wird auf einen kontinuierlich betriebenen Schwingfließbetttrockner gegeben. Die Schütthöhe beträgt 18 cm, die Gerätebelastung 200 kg/m², die Bettgeschwindigkeit beträgt 0,01 m/s. Als Trocknungs-und Karbonatisiergas dient Abgas aus einem Kalkdrehofen mit einem Volumenanteil von 17 % $CO_2$ und einer Temperatur von 200 °C mit einer Strömungsgeschwindigkeit von 0,75 m/s bezogen auf den freien Querschnitt. Die Prozeßzeit beträgt 10 min. Im erhaltenen rekarbonatisier-

EP 0 293 855 B1

ten Granulat beträgt der Massenanteil an Kalziumhydroxid weniger als 3 % und der Massenanteil an Wasser (Restfeuchtegehalt) weniger als 0,2 %.

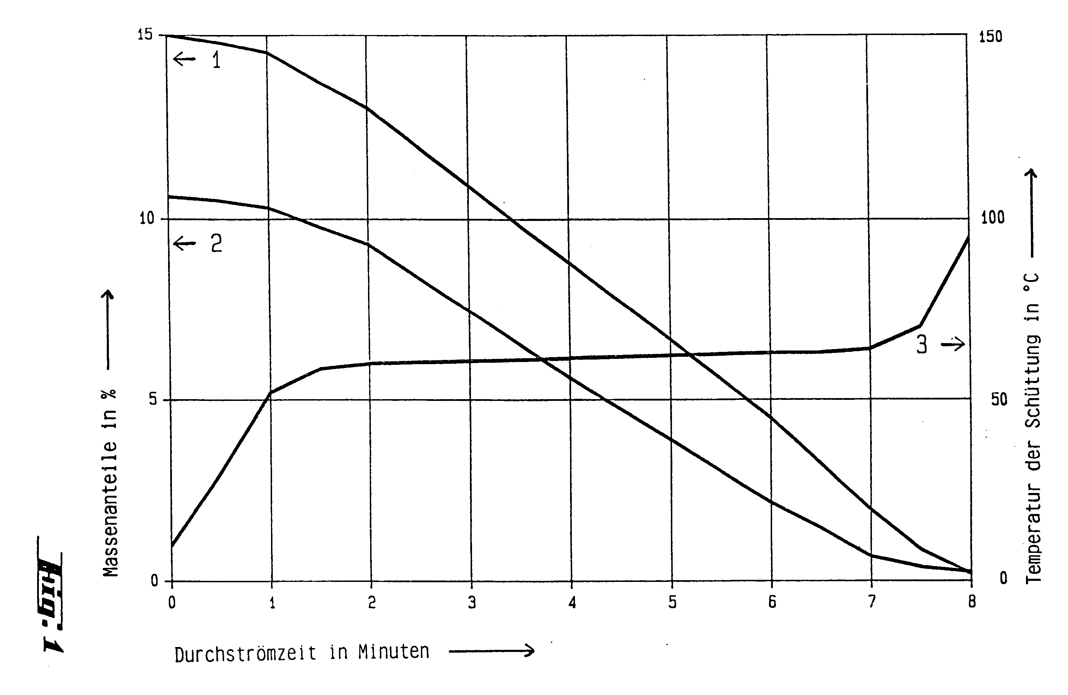

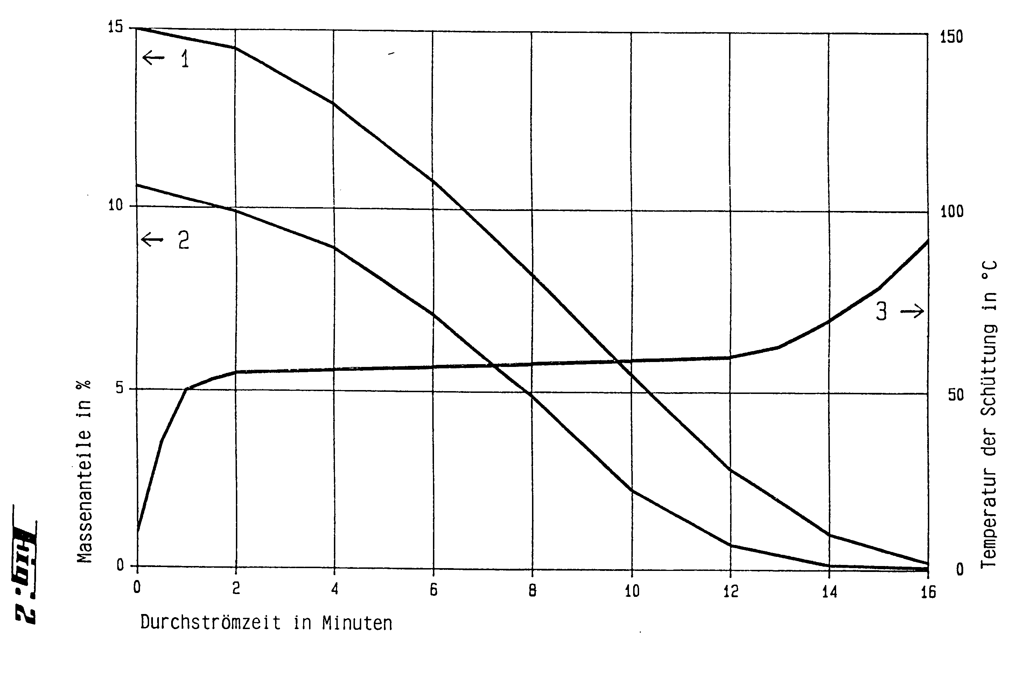

Weitere Versuchsergebnisse sind als zeitabhängiger Verlauf von Trocknung und Karbonatisierung in Fig. 1 und Fig. 2 dargestellt. Dabei bedeutet in der Zeichnung

Kurve 1: Wassergehalt (als Massenanteile in %) Abhängigkeit von der Zeit,

Kurve 2: Kalziumhydroxidgehalt (als Massenanteile in %) in Abhängigkeit von der Zeit,

Kurve 3: Temperatur der Schüttung (in °C) in Abhängigkeit von der Zeit.

Fig. 1 zeigt, daß ausgehend von der Mischung und der Versuchsanordnung aus Beispiel 1 bei einer Strömungsgeschwindigkeit des Gases (Volumenanteil 13 % $CO_2$) von 1,4 m/s und einer Gas-Temperatur von 165 bis 180 °C die Umsetzung des Kalziumhydroxids zu Karbonat und die Trocknung nach ca. 8 min vollständig sind.

Fig. 2 bezieht sich auf die Versuchsanordnung und das Karbonatisiergas aus Beispiel 2 mit einer Strömungsgeschwindigkeit des Gases von 1,2 m/s und einer Gas-Temperatur von 160 bis 180 °C. Die Umwandlung zu Karbonat ist nach 14 min, die Trocknung nach 16 min vollständig.

Das erfindungsgemäße Granulat kann auch vorteilhafterweise Verwendung als Adsorbens für saure Rauchgasbestandteile in Schüttschichtfiltern oder in einer Wirbelschichtfeuerung finden.

**Patentansprüche**

1. Granulat aus gebrochener Körnung von Erdalkalikarbonaten und einem kalkhaltigen Bindemittel in Form eines aus Erdalkalihydroxid rekarbonatisierten Erdalkalikarbonats, dadurch gekennzeichnet, daß die Granulatkörner eine Porosität aufweisen.

2. Granulat nach Anspruch 1, dadurch gekennzeichnet, daß die Druckfestigkeit in einem Bereich von 500 bis 10000 N/Granulat einstellbar ist.

3. Verfahren zur Herstellung des Granulats aus gebrochener Körnung von Erdalkalikarbonaten nach Anspruch 1 oder 2 unter Zusatz von Erdalkalihydroxid und Wasser durch Umsetzung mit gasförmigem $CO_2$ in einem fluidisierten Bett, dadurch gekennzeichnet, daß die Betthöhe des fluidisierten Bettes so eingestellt wird, daß die Reaktionsgeschwindigkeit der Umsetzung mit $CO_2$ größer ist als die Trocknungsgeschwindigkeit der Schüttung.

4. Verwendung des Granulats nach einem der Ansprüche 1 bis 3 als Bestandteil eines Futtermittels.

5. Verwendung des Granulats nach einem der Ansprüche 1 bis 3 als Adsorbens für saure Rauchgasbestandteile in Schüttschichtfiltern oder in einer Wirbelschichtfeuerung.

**Claims**

1. Granulated material composed of crushed grains of alkaline earth carbonates and a lime-containing binder in the form of an alkaline earth carbonate recarbonatised from alkaline earth hydroxide, characterised in that the granules have a porosity.

2. Granulated material according to claim 1, characterised in that the compressive strength can be set to within a range of 500 to 10000 N/granule.

3. Process for manufacturing the granulated material from crushed grains of alkaline earth carbonates according to claim 1 or 2 by the addition of alkaline earth hydroxide and water by reaction with gaseous $CO_2$ in a fluidised bed, characterised in that the level in the fluidised bed is so set that the speed of the reaction with $CO_2$ is greater than the drying speed of the bulk product.

4. Use of the granulated material according to one of claims 1 to 3 as a component of a fodder.

5. Use of the granulated material according to one of claims 1 to 3 as an adsorbent for acidic exhaust gas components in bulk layer filters or in a fluidised bed furnace.

**Revendications**

4

1. Granulés en granulométrie étagée de carbonates d'alcalino-terreux et d'un liant contenant de la chaux sous forme d'un carbonate d'alcalino-terreux recarbonaté à partir d'hydroxyde alcalino-terreux, caractérisés en ce que les grains du granulé ont une porosité.

2. Granulés selon la revendication 1, caractérisé en ce que la résistance à la pression est réglable dans un domaine de 500 à 10 000 N/granulé.

3. Procédé pour fabriquer des granulés en granulométrie étagée de carbonates d'alcalino-terreux selon la revendication 1 ou la revendication 2 en ajoutant de l'hydroxyde alcalino-terreux et de l'eau par réaction avec du gaz $CO_2$ dans un lit fluidisé, caractérisé en ce que la hauteur du lit fluidisé est ajustée de façon que la vitesse de réaction de la transformation avec $CO_2$ soit plus grande que la vitesse de séchage du produit en vrac.

4. Utilisation des granulés selon une des revendications 1 à 3 en tant que composant d'un agent de garnissage.

5. Utilisation des granulés selon une des revendications 1 à 3 en tant qu'adsorbant pour des composants de gaz de fumée acides dans des filtres à lits en vrac ou dans un chauffage à couche fluidisée.

Fig. 1

Temperatur der Schüttung in °C

Durchströmzeit in Minuten

Massenanteile in %

Fig. 2